# EUROPÄISCHE PATENTSCHRIFT

(11) **EP 4 321 457 B1**
(45) Veröffentlichungstag und Bekanntmachung des Hinweises auf die Patenterteilung: **02.04.2025**
(21) Anmeldenummer: 22189458.7
(22) Anmeldetag: 09.08.2022
(51) Int. Cl.: B65G 23/44, B65G 39/16

(54) **BANDFÖRDERER EINER LEBENSMITTELVERARBEITUNGSANLAGE**
BELT CONVEYOR FOR A FOOD PROCESSING INSTALLATION
BANDE TRANSPORTEUSE D'UNE INSTALLATION DE TRANSFORMATION ALIMENTAIRE

(43) Veröffentlichungstag der Anmeldung: 14.02.2024
(73) Patentinhaber: Bühler GmbH, 51580 Reichshof (DE)
(72) Erfinder: Marticke, Steffen, 01920 Nebelschütz (DE); Hennig, Robert Oliver, 01097 Dresden (DE)
(74) Vertreter: Puchberger & Partner Patentanwälte

(56) Entgegenhaltungen:
- WO-A1-2012/021059
- CN-A- 108 945 990
- JP-A- S6 112 552

## Beschreibung

Die Erfindung betrifft einen Bandförderer gemäß dem Oberbegriff des unabhängigen Anspruchs 1 sowie in einer Ausgestaltung eine Lebensmittelverarbeitungsanlage gemäß Anspruch 13.

Lebensmittelverarbeitungsanlagen und darin eingesetzte Bandförderer sind in unterschiedlichen Ausführungsformen bekannt. Ein Bandförderer, der den Oberbegriff des Anspruchs 1 offenbart, ist beispielsweise in Dokument WO 2012/021059 A1 offenbart.

Besonders bei Bandförderern größerer Dimension, wie beispielsweise Bandförderern mit einem endlosen Stahlband von einer Länge von mehr als 20m und einer Breite von etwa 1m, treten an den mechanischen Komponenten hohe Kräfte auf. Ein Grund dafür ist, dass das Förderband eine ausreichende Lagestabilität aufweisen muss, um eine qualitativ hochwertige Lebensmittelverarbeitung zu ermöglichen. Hierfür muss die Lage des Bandes in beide Querrichtungen, also seitlich entlang der Förderfläche und nach oben und unten, also quer zur Förderfläche, konstant gehalten werden. Dies wird einerseits durch eine angemessen hohe Bandspannung erreicht. Andererseits muss auch der Geradeauslauf des Bandes exakt eingestellt sein.

Bei herkömmlichen Systemen werden für den Geradeauslauf keilriemenartige Führungen verwendet, bei denen an der Innenseite des Förderbandes ein langgestreckter umlaufender Keil angebracht ist, der in einer Führungsrolle mit einer Nut geführt ist. Nachteilig an diesen Konstruktionen ist, dass aufgrund von Fertigungstoleranzen Förderbänder größerer Dimension nahezu unweigerlich in eine seitliche Richtung tendieren, womit diese Keilriemensysteme starkem Verschleiß ausgesetzt sind. Insbesondere im Bereich der Lebensmittelverarbeitung ist dies problematisch, da der Abrieb die Lebensmittel verunreinigen könnte.

Eine alternative Möglichkeit zur Bandlaufkorrektur stellen Systeme mit sogenannten Lenktrommeln dar. Bei üblichen Vorrichtungen ist das Förderband zwischen zwei Umlenktrommeln gespannt. Um die Laufrichtung des Förderbands anpassen zu können, ist bei diesem alternativen System nun die Drehachse einer der Umlenktrommeln in gewissem Maße verschwenkbar, sodass diese Umlenktrommel schräggestellt werden kann und als Lenktrommel wirkt. Die Umlenktrommel weist hierzu seitlich auskragende Achszapfen auf, die in Drehlagern gelagert sind. Die Drehlager sind bevorzugt als Pendellager ausgebildet. Die Drehlager wiederum sind in Linearführungen entlang der Hauptförderrichtung des Förderbands bewegbar geführt. Über steuerbare Antriebe kann nun die Lage der Drehlager linear verändert werden, um die Lenktrommel zu verschwenken und so den Bandlauf zu steuern.

Zusätzlich zu den Lenkkräften lastet auch die oben genannte Bandspannung auf den Drehlagern der Umlenktrommel. Somit muss bei herkömmlichen Lenktrommeln der Antrieb zur Verstellung der Lage der Drehlager nicht nur die Lenkkräfte sondern auch die Bandspannung überwinden oder tragen. Zudem muss die Bandspannung auch konstant gehalten werden, was die Verstellung der Drehlager weiter erschwert.

Aufgabe der Erfindung ist es nun, einen Bandförderer für eine Lebensmittelverarbeitungsanlage zu schaffen, der eine verbesserte Effizienz aufweist. Diese Effizienz kann beispielsweise dadurch verbessert werden, dass Lebensmittelprodukte mit hoher Qualität verarbeitet werden können, wodurch der Ausschuss verringert wird. Die Effizienz kann gegebenenfalls auch dadurch verbessert werden, dass der Bandförderer einfach und robust aufgebaut ist. Dadurch können die Herstellungskosten und die Wartungskosten verringert werden.

Die Aufgabe wird durch das Merkmal des unabhängigen Patentanspruchs 1 gelöst.

Die Erfindung betrifft einen Bandförderer einer Lebensmittelverarbeitungsanlage bzw. für eine Lebensmittelverarbeitungsanlage, umfassend eine Steuerungsanordnung, einen Bandantrieb, einen Bandspanner, zwei Umlenkrollen und ein, entlang einer Hauptförderachse zwischen den beiden Umlenkrollen durch den Bandspanner gespanntes und von dem Bandantrieb angetriebenes, endloses Förderband.

Eine Umlenkrolle oder beide Umlenkrollen ist/ sind jeweils über seitliche Zapfen beidseitig in Drehlagern drehgelagert, wobei die Drehlager einer Umlenkrolle oder beider Umlenkrollen jeweils, insbesondere in einem Linearlager, entlang der Hauptförderachse, insbesondere translatorisch, verlagerbar angeordnet sind.

Die Drehlager sind bevorzugt in allen Ausführungsformen als Pendellager ausgeführt.

Es ist eine Bandlaufkorrekturanordnung vorgesehen, die den Geradeauslauf des Förderbandes durch Schrägstellung der Drehachse mindestens einer der Umlenkrollen lenkt.

Die Bandlaufkorrekturanordnung umfasst einen Korrekturantrieb, eine quer zur Hauptförderachse verlaufende und von dem Korrekturantrieb antreibbare Korrekturwelle und zwei an der Korrekturwelle vorgesehene, gegengleich exzentrisch wirkende, Antriebsglieder.

Es ist vorgesehen, dass die beiden Antriebsglieder jeweils mit einem der Drehlager in Wirkkontakt stehen und diese bei einer Verdrehung der Korrekturwelle gegengleich, insbesondere translatorisch, entlang der Hauptförderachse verlagern und dadurch die Umlenkrolle um eine Korrekturachse verschwenken.

Gegebenenfalls ist vorgesehen, dass die Antriebsglieder drehfest an der Korrekturwelle angeordnete Exzenter sind.

Gegebenenfalls sind die Antriebsglieder drehfest an der Korrekturwelle angeordnete Nocken oder Kurbeln, wodurch die Korrekturwelle beispielsweise als Nockenwelle oder als Kurbelwelle ausgebildet ist.

Es kann vorteilhaft sein, wenn die exzentrischen Antriebsglieder derart gegengleich und um 180° zueinander verdreht an der Korrekturwelle vorgesehen sind, dass die von der Kraft der Bandspannung über die Umlenkrolle und die beiden exzentrischen Antriebsglieder auf die Korrekturwelle ausgeübten Drehmomente gleich groß und entgegengesetzt sind und einander dadurch aufheben.

Gegebenenfalls ist vorgesehen, dass bei einer Verdrehung der Korrekturwelle das eine Antriebsglied das mit diesem Antriebsglied in Wirkkontakt stehende Drehlager um einen Korrekturweg entlang der Hauptförderachse translatorisch verlagert und das andere Antriebsglied das andere Drehlager derselben Umlenkrolle um denselben Korrekturweg entlang der Hauptförderachse aber in die entgegengesetzte Richtung translatorisch verlagert.

Gegebenenfalls beträgt der maximale Korrekturweg jeweils, also insbesondere der Korrekturweg jedes Antriebsglieds (14) +-5mm oder +-2,5mm.

Gegebenenfalls ist vorgesehen, dass die Steuerungsanordnung mindestens einen Bandlaufsensor zur Aufnahme oder Überwachung des Bandlaufs und insbesondere der lokalen Bandposition aufweist.

Gegebenenfalls ist vorgesehen, dass die Steuerungsanordnung ein Signal des Bandlaufsensors verarbeitet, um den Bandlauf durch Betätigung des Korrekturantriebs der Bandlaufkorrekturanordnung zu steuern oder zu regeln, wobei insbesondere der Korrekturantrieb gesteuert oder geregelt wird.

Gegebenenfalls ist vorgesehen, dass die Bandlaufkorrektur der Bandlaufkorrekturanordnung im Wesentlichen spannungsneutral erfolgt und somit die Gesamtbandspannung des Förderbandes bei einer Betätigung der Bandlaufkorrekturanordnung im Wesentlichen unverändert bleibt.

Gegebenenfalls ist vorgesehen, dass die Korrekturachse, um die die Umlenkrolle durch Verdrehen der Korrekturwelle verschwenkt wird:
- durch den Mittelpunkt der Umlenkrolle,
- durch die Drehachse der Umlenkrolle,
- normal zur Drehachse der Umlenkrolle,
- und im Wesentlichen normal zur Hauptförderachse verläuft.

Gegebenenfalls ist vorgesehen, dass der Bandspanner eine von der Bandlaufkorrekturanordnung unabhängig arbeitende Vorrichtung des Bandförderers ist.

Gegebenenfalls ist vorgesehen, dass der Bandspanner mindestens einen eigenen Bandspannungsaktuator zur Erzeugung der Bandspannung aufweist.

Gegebenenfalls ist vorgesehen, dass der Bandspanner eine quer zur Hauptförderachse verlaufende Spanntraverse aufweist, die entlang der Hauptförderachse verlagerbar und parallelgeführt ist.

Gegebenenfalls ist vorgesehen, dass die Spanntraverse mit den verlagerbaren Drehlagern einer der Umlenkrollen in Wirkkontakt steht.

Gegebenenfalls ist vorgesehen, dass mindestens ein Bandspannungsaktuator vorgesehen ist, der insbesondere als Balgantrieb ausgebildet ist, und der, zur Erzeugung der gewünschten Bandspannung, über die Spanntraverse auf beide Drehlager dieselbe Spannkraft bzw. dieselbe Spannbewegung ausübt.

Gegebenenfalls ist vorgesehen, dass die Bandlaufkorrekturanordnung an der Spanntraverse angebracht und mit dieser, insbesondere parallel, verschiebbar angeordnet ist.

Gegebenenfalls ist vorgesehen, dass der Bandspanner und insbesondere dessen Bandspannungsaktuator über die Bandlaufkorrekturanordnung auf die Drehlager der Umlenkrolle wirkt.

Gegebenenfalls ist vorgesehen, dass der Bandantrieb eine der beiden Umlenkrollen antreibt.

Gegebenenfalls ist vorgesehen, dass eine der beiden Umlenkrollen von dem Bandantrieb angetrieben ist und der Bandspanner auf die andere Umlenkrolle wirkt.

Gegebenenfalls ist vorgesehen, dass an beiden Umlenkrollen je eine eigene Bandlaufkorrekturanordnung angreift.

Gegebenenfalls ist vorgesehen, dass das Förderband ein Stahlband ist,
- und/oder dass das Stahlband bevorzugt eine Breite von 1m bis 2m aufweist,
- und/oder dass das Stahlband bevorzugt eine Dicke von 1mm bis 1,5mm aufweist,
- und/oder dass das Stahlband bevorzugt eine Länge von 20 bis 100m aufweist,
- und/oder dass das Stahlband bevorzugt eine Fördergeschwindigkeit von 5m/min bis 20m/min aufweist,
- und/oder dass die Bandspannung bevorzugt 10N/mm² bis 30N/mm² beträgt. Gemäß einer exemplarischen Ausführungsform kann der Bandzug 10kN bis 30kN betragen.

Gegebenenfalls betrifft die Erfindung eine Lebensmittelverarbeitungsanlage umfassend:
- einen Bandförderer,
- eine Auftragsstation zum Auftrag einer zu verarbeitenden Lebensmittelmasse, wie insbesondere einer portionierten, geschmolzenen, fetthaltigen Masse oder einem portionierten Teig, auf den Bandförderer,
- eine gekühlte oder beheizte Temperierstrecke zum Temperieren und insbesondere Verfestigen bzw. Backen der Lebensmittelmasse,
- und eine Abnahmestation zum Entfernen der zuvor temperierten Lebensmittelmasse von dem Bandförderer.

Gegebenenfalls ist vorgesehen, dass die Auftragsstation eine fetthaltige Masse punktförmig oder tropfenförmig auf den kontinuierlich bewegten Bandförderer aufträgt.

Gegebenenfalls ist vorgesehen, dass die Temperierstrecke durch einen Temperierraum verläuft, der ein gekühlter Raum und insbesondere ein Kühltunnel ist, in dem die punktförmig aufgetragene, fetthaltige Masse durch Kühlen verfestigt wird.

Gegebenenfalls ist vorgesehen, dass die Abnahmestation die verfestigten Körper von dem Bandförderer entfernt.

Gegebenenfalls ist vorgesehen, dass eine Rüttelstation vorgesehen ist, die das Förderband und die darauf punktförmig oder tropfenförmig aufgetragene Masse nach der Auftragsstation und vor deren Verfestigung rüttelt.

Die Drehachse wird zur Lenkung des Bandlaufs insbesondere relativ zur Hauptförderrichtung verschwenkt. Im Optimalfall stehen die Drehachse der Umlenkrolle und die Hauptförderrichtung normal zueinander, wenn das Förderband geradeaus läuft. Kommt es aufgrund von Toleranzen oder Störeinflüssen zu einem Schieflauf des Förderbands, so wird die Drehachse der Umlenkrolle von der Bandlaufkorrekturanordnung geneigt bzw. verschwenkt, um den Bandlauf zu korrigieren.

Bevorzugt ist vorgesehen, dass bei dem Bandförderer die Bandlaufkorrekturanordnung und der Bandspanner unabhängig voneinander betätigbar sind, sodass der Antrieb der Bandlaufkorrekturanordnung im Wesentlichen nur die Kräfte der Bandlaufkorrektur tragen muss und nicht direkt gegen die Bandspannungskräfte arbeitet. Hierzu ist bevorzugt vorgesehen, dass die Bandlaufkorrekturanordnung im Wesentlichen spannungsneutral bzw. drehmomentneutral arbeitet. Dies wird insbesondere durch die spezielle kinematische Ausgestaltung der Bandlaufkorrekturanordnung bewirkt. So ist eine Korrekturwelle vorgesehen, durch deren Verdrehung bzw. Verschwenkung auch eine der Umlenkrollen verschwenkt werden kann. An der Korrekturwelle ist für jedes Drehlager ein exzentrisch wirkendes Antriebsglied wie insbesondere ein Exzenter bzw. eine Exzenterscheibe vorgesehen. Bevorzugt sind diese Antriebsglieder gegengleich angeordnet, sodass bei einem Verdrehen der Korrekturwelle die beiden Drehlager eine gegengleiche Hubbewegung bewirken. Wird das eine Drehlager gegen die Bandspannung bewegt, so wird das andere Drehlager in gleicher Weise mit der Bandspannung bewegt und die Gesamtbandspannung bleibt im Wesentlichen unverändert.

Kinematisch wird dieser Effekt insbesondere dadurch bewirkt, dass die Korrekturachse, um die die Umlenkrolle verschwenkt wird, durch den Mittelpunkt der Drehachse der Umlenkrolle und normal zur Drehachse und zur Hauptförderachse verläuft.

Ein weiterer Vorteil der speziellen, bevorzugten Ausgestaltung der Korrekturwelle und der Antriebsglieder ist, dass die von der Bandspannung über die Drehlager und die Antriebsglieder auf die Korrekturwelle übertragenen Kräfte an der Korrekturwelle drehmomentneutral sind und den Korrekturantrieb nicht dauerhaft belasten. So wirken über beide Drehgelenke die Bandzugkräfte auf je ein Antriebsglied. Bevorzugt steht in der Grundstellung das eine Antriebsglied von der Korrekturwelle in Richtung der Korrekturachse, also beispielsweise nach oben und das andere Antriebsglied in die entgegengesetzte Richtung. Die Antriebsglieder weisen bevorzugt denselben Wirkradius auf und sind 180° zueinander verdreht angeordnet. Das durch die Bandkraft über das eine Antriebsglied in die Korrekturwelle eingeleitete Drehmoment entspricht somit exakt dem am anderen Antriebsglied eingebrachten Drehmoment, jedoch mit entgegengesetzten Vorzeichen. Dadurch treten in der Korrekturwelle zwar Torsionskräfte auf - die Drehmomentbilanz an der Korrekturwelle ist jedoch ausgeglichen.

Zur Bandlaufkorrektur ist durch die spezielle Ausgestaltung ein einziger Korrekturantrieb ausreichend, der beispielsweise als Drehantrieb ausgebildet ist und die Korrekturwelle antreibt. Der Korrekturantrieb muss dabei bevorzugt nur die Differenzkraft durch die Verschwenkung und die Reibung aus dem Gesamtbandzug überwinden, um den Bandlauf einzustellen. Die Bandlaufkorrekturanordnung arbeitet dadurch nach dem Prinzip einer Wippe.

Die Verstellung bzw. Verschwenkung der Drehachse erfolgt bevorzugt in einer Ebene, die geometrisch einerseits durch die Drehachse der Umlenkrolle in ihrer Grundstellung und die Hauptförderachse aufgespannt wird. Bei einem herkömmlichen waagrechten Bandförderer wird die Drehachse somit in einer waagrechten Ebene verschwenkt. Die Korrekturachse verläuft bei dieser Ausführungsform lotrecht.

Es entspricht jedoch durchaus dem Erfindungsgedanken, wenn die Drehachse in einer anderen Ebene verstellt wird, solange dadurch der Bandlauf korrigiert werden kann. Die Verstellung der Drehlager erfolgt bevorzugt entlang der Hauptförderachse, wobei auch hier eine von der Hauptförderachse abweichende Verstellung durchgeführt werden kann, solange dies zu einer Bandlaufkorrektur geeignet ist. Die Verlagerung der Drehlager soll zwar entlang der Hauptförderachse erfolgen, sie muss aber nicht zwingend exakt entlang der Hauptförderachse erfolgen.

Die Antriebsglieder sind bevorzugt Exzenterscheiben, also drehfest mit der Korrekturwelle angeordnete, kreisrunde Scheiben, die exzentrisch an der Korrekturwelle angeordnet sind, sodass bei einer Verdrehung der Korrekturwelle eine translatorische Bewegung erzeugt werden kann. Die Exzenterscheiben sind bevorzugt kugelgelagert oder rollengelagert in dafür vorgesehenen Aufnahmen angeordnet. Gegebenenfalls können, je nach Anforderung, auch Gleitlager verwendet werden. Die Betätigung bzw. der Wirkkontakt zwischen dem Drehlager und dem Antriebsglied kann beispielsweise über Schubstangen/Zugstangen oder direkt erfolgen.

Um eine selbsttätige Bandlaufkorrektur zu ermöglichen, ist eine Steuerungsanordnung vorgesehen. Diese Steuerungsanordnung ist dazu geeignet und/oder eingerichtet, den Bandlauf zu steuern und/oder zu regeln. Hierzu umfasst die Steuerungsanordnung einen Bandlaufsensor, der die Lage des Bandes, insbesondere die seitliche Lage des Bandes, detektieren kann. Der Bandlaufsensor ist bevorzugt im Bereich jener Umlenkrolle positioniert, die verstellt wird, um den Bandlauf in Abhängigkeit des Sensorsignals des Bandlaufsensors einzustellen. Sind beide Umlenkrollen verstellbar ausgebildet, um eine Bandlaufkorrektur vorzunehmen, so kann auch bei beiden Umlenkrollen je ein Bandlaufsensor vorgesehen sein.

Eine Regelung der beiden Umlenkrollen kann dann getrennt oder in einem gemeinsamen Regelkreis erfolgen. Bevorzugt erfolgt in allen Ausführungsformen eine Regelung des Korrekturantriebs.

Bei einer Regelung wird der Bandverlauf bevorzugt durch mindestens einen Sensor, beispielsweise mit einer Auflösung kleiner 0,1 mm, erfasst. Der Sensor erfasst die Position der Bandkante des Förderbands. Die Erfassung geschieht beispielsweise am einlaufenden Bandabschnitt. Je nach Bandverlauf verschränkt die Bandlaufkorrekturanordnung die Umlenktrommel und korrigiert dadurch den Bandlauf. Der Sensor erkennt dann den korrigierten Bandlauf und die Bandlaufkorrekturanordnung fährt wieder in eine neutrale Stellung.

Die Bandspannung wird durch den Bandspanner und bevorzugt durch zwei Balgantriebe bzw. Balgzylinder aufgebracht. Zur Entkopplung der Bandspannung von den Steuer- bzw. Regelkräften zur Bandlaufkorrektur ist die Spanntraverse vorgesehen.

In weiterer Folge wird die Erfindung anhand der Figuren weiter beschrieben.

Wenn nicht anders angegeben, so entsprechen die Bezugszeichen in den Figuren folgenden Komponenten: Steuerungsanordnung 1, Bandantrieb 2, Bandspanner 3, Umlenkrolle 4, Hauptförderachse 5, Förderband 6, Zapfen 7, Drehlager 8, Linearlager 9, Bandlaufkorrekturanordnung 10, Drehachse (der Umlenkrolle) 11, Korrekturantrieb 12, Korrekturwelle 13, Antriebsglied 14, Korrekturachse 15, Korrekturweg 16, Bandlaufsensor 17, Bandspannungsaktuator 18, Spanntraverse 19, Schubstange 20, Auftragstation 21, Temperierstrecke 22, Abnahmestation 23, Rüttelstation 24.
Fig. 1 zeigt eine schematische Schnittdarstellung einer Lebensmittelverarbeitungsanlage mit einem Bandförderer.
Fig. 2 zeigt eine Schrägansicht von Komponenten eines Bandförderers im Bereich einer Umlenkrolle, insbesondere einer Spannstation.
Fig. 3 zeigt eine schematische Schnittdarstellung von Komponenten eines Bandförderers, insbesondere in jenem Bereich, der in Fig. 2 dargestellt ist.
**Fig. 4** zeigt eine schematische Schrägansicht eines Bandförderers im Bereich einer Umlenkrolle, insbesondere einer Antriebsstation.

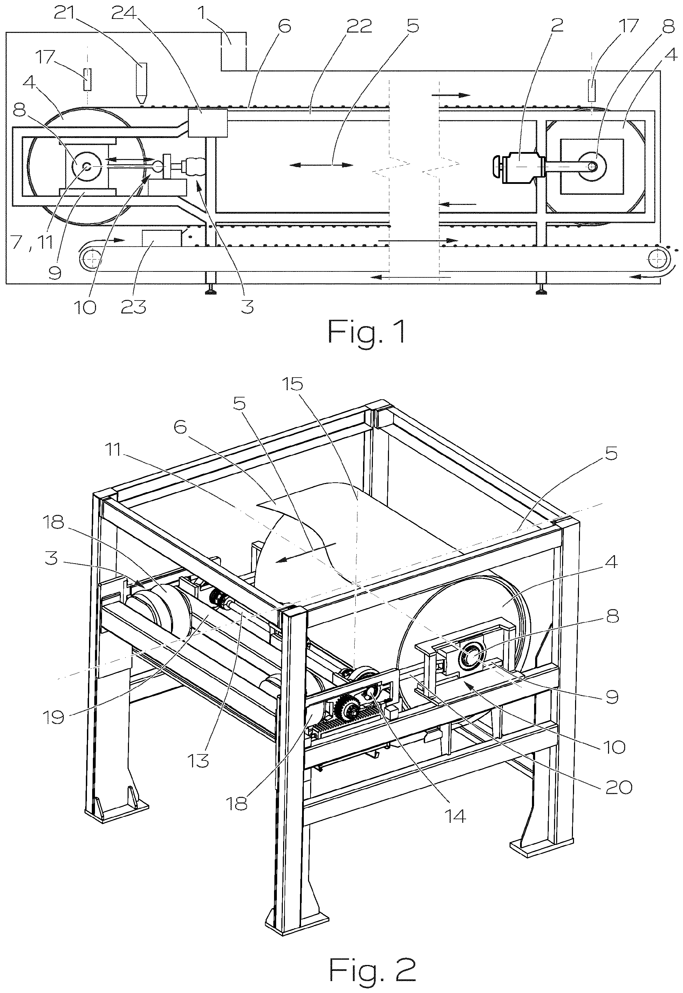

Fig. 1 zeigt eine Lebensmittelverarbeitungsanlage mit einem Bandförderer. Der Bandförderer umfasst zwei Umlenkrollen 4, zwischen denen ein Förderband 6 gespannt ist. Das Förderband 6 verläuft im Wesentlichen entlang einer Hauptförderachse 5 und insbesondere einer ersten Transportebene von einer Umlenkrolle 4 zur anderen Umlenkrolle 4, und in einer zweiten Transportebene wieder zurück zur ersten Umlenkrolle 4. Die beiden Umlenkrollen 4 können in allen Ausführungsformen gleich groß ausgebildet sein.

Zumindest eine der Umlenkrollen 4 ist mit einem Bandantrieb 2 angetrieben, sodass das Förderband 6 bewegt und insbesondere kontinuierlich bewegt werden kann. Zudem umfasst der Bandförderer bevorzugt einen Bandspanner 3, der das Förderband 6 zwischen den beiden Umlenkrollen 4 spannt. Insbesondere wirkt der Bandspanner 3 auf mindestens eine der Umlenkrollen 4, um das Förderband 6 zu spannen.

Die Umlenkrollen 4 weisen bevorzugt Zapfen 7 auf, die jeweils in Drehlagern 8 drehbar gelagert sind. Die Drehlager 8 sind in der vorliegenden Ausführungsform entlang der Hauptförderachse 5 verlagerbar angeordnet, wobei die Drehlager 8 insbesondere in Linearlagern 9 verschiebbar gelagert sind. Dadurch kann die Position der Drehlager 8 entlang der Hauptförderachse 5 gewählt und geändert werden. Die Verstellung der Lage der Drehlager 8 erfolgt insbesondere über die Bandlaufkorrekturanordnung 10. Durch diese Bandlaufkorrekturanordnung 10 kann der Verlauf der Drehachse 11 der Umlenkrolle 4 verstellt werden. Die Drehachse 11 verläuft in der vorliegenden Ansicht projizierend. Zur Steuerung der Bandlaufkorrekturanordnung 10 ist eine Steuerungsanordnung 1 vorgesehen. Diese steuert und/oder regelt den Bandlauf des Förderbands 6. Hierzu können ein oder mehrere Bandlaufsensoren 17 vorgesehen sein. Die Bandlaufsensoren 17 sind dazu geeignet und/oder eingerichtet, die Lage des Förderbands 6, insbesondere die seitliche Lage des Förderbands 6, zu detektieren. Das Signal des detektierenden Bandlaufsensors 17 kann von der Steuerungsanordnung 1 verarbeitet werden, um eine automatisierte Bandlaufkorrektur zu ermöglichen. Eine Bandlaufkorrekturanordnung 10 kann an einer oder an beiden Umlenkrollen 4 vorgesehen sein.

In der vorliegenden Ausführungsform umfasst die Lebensmittelverarbeitungsanlage eine Auftragsstation 21 zum Auftrag einer Lebensmittelmasse auf das Förderband 6. Beispielsweise kann diese Auftragsstation 21 eine Auftragsstation 21 für Teig, eine auszuhärtende Masse wie beispielsweise Schokolade, einen ausgestochenen oder andersartig portionierten Keksteig oder eine andere Lebensmittelmasse sein.

Nach der Auftragsstation 21 wird das Förderband 6 und die darauf aufgetragene Masse durch eine Bearbeitungsstrecke, insbesondere eine Temperierstrecke 22 befördert. Die Temperierstrecke 22 ist beispielsweise eine Strecke zum Beheizen oder Kühlen des Förderbands 6 bzw. der darauf aufgetragenen Masse. Die Temperierstrecke 22 kann beispielsweise der Backraum eines Backofens, der Einlaufbereich mit Bandvorheizung einer Herstellungsanlage für Kekse oder auch ein Kühltunnel zur Verfestigung von einer fetthaltigen Masse wie beispielsweise Schokolade sein.

Die Lebensmittelverarbeitungsanlage umfasst eine Abnahmestation 23, in der die durch die Auftragsstation 21 aufgetragene und entlang der Temperierstrecke 22 verarbeitete Masse abgenommen werden kann.

In der vorliegenden Ausführungsform ist die Lebensmittelverarbeitungsanlage als Anlage zur Herstellung einer Vielzahl kleiner Schokoladekörper eingerichtet. Schokolade wird in der Auftragsstation 21 in geschmolzenem, pastösem Zustand auf das Förderband 6 punktförmig bzw. tropfenförmig aufgetragen.

In weiterer Folge kann, wie bei der vorliegenden Ausführungsform, eine Rüttelstation 24 vorgesehen sein. Diese Rüttelstation 24 rüttelt das Förderband 6 und die darauf aufgetragenen tropfenförmigen Körper, solange diese noch nicht verfestigt sind. In weiterer Folge durchlaufen die Körper auf dem Förderband 6 die Temperierstrecke 22. Diese Temperierstrecke 22 verläuft in der vorliegenden Ausführungsform von der Auftragsstation 21 bis zur nachgeordneten Umlenkrolle 4 und, an der Unterseite des Förderbands 6, wieder zurück bis zur Abnahmestation 23. Die Körper haften dabei nach der Umlenkrolle 4 an der Unterseite des Förderbands 6, bis sie von der Abnahmestation 23, beispielsweise durch einen Abstreifer, von dem Förderband 6 entfernt werden.

In weiterer Folge können die verfestigten Körper über herkömmliche Mittel wie beispielsweise ein Transportband aus der Lebensmittelverarbeitungsanlage abtransportiert werden.

Grundsätzlich kann der Bandförderer jedoch in beliebigen Anwendungen eingesetzt werden.

Fig. 2 zeigt Details von Komponenten eines Bandförderers im Bereich einer Umlenkrolle 4. Das Förderband 6 ist um die Umlenkrolle 4 umgelenkt und erstreckt sich von der Umlenkrolle 4 entlang einer Hauptförderachse 5 zur anderen Umlenkrolle 4, die in der Darstellung der Fig. 2 nicht eingezeichnet ist.

Zur Erzeugung der notwendigen Bandspannung für das Förderband 6 ist ein Bandspanner 3 vorgesehen. Der Bandspanner 3 umfasst mindestens einen Bandspannungsaktuator 18, der die Spannkraft der Bandspannung erzeugt. In der vorliegenden Ausführungsform wirkt der Bandspannungsaktuator 18 auf eine Spanntraverse 19. Die Spanntraverse 19 ist in der vorliegenden Ausführungsform parallel geführt und entlang der Hauptförderachse 5 verlagerbar. Die Parallelführung geschieht beispielsweise über eine Achse oder Welle, die sich von einer Seite der Spanntraverse 19 bis zur anderen Seite erstreckt und die an zwei Stellen mit einem Zahnrad versehen ist. Die Zahnräder laufen in zwei fest montierten Zahnstangen, womit sie miteinander einerseits über die Achse bzw. Welle und andererseits über die fest montierten Zahnstangen gekoppelt sind. Durch die starre Kopplung bewegt sich das eine Ende der Spanntraverse 19 parallel zum anderen Ende, wodurch eine Parallelführung bewirkt wird. Durch diese Parallelführung der Spanntraverse 19 wird insbesondere erreicht, dass im Falle einer Bandlaufkorrektur durch Verschieben der Drehlager 8 entlang der Hauptförderachse 5 keine Rückkopplung auf die Bandspannungsaktuatoren 18 erfolgt. Der Bandspanner 3 wirkt, insbesondere über weitere Komponenten, auf die beiden Drehlager 8, in denen die Zapfen 7 der Umlenkrolle 4 gelagert sind. Die Zapfen 7 und die Drehlager 8 sind beidseitig seitlich der Umlenkrolle 4 vorgesehen.

Die Drehlager 8 sind in der vorliegenden Ausführungsform in einem Linearlager 9 entlang der Hauptförderachse 5 verlagerbar. Wird der Bandspanner 3 aktiviert, so werden die Drehlager 8 entlang der Linearlager 9 gegen die Bandspannung des Förderbands 6 bewegt bzw. gedrückt, um die Bandspannung zu erhöhen bzw. einzustellen. Durch die Parallelführung der Spanntraverse 19 geschieht die Veränderung der Bandspannung auf beide Drehlager 8 parallel.

In der vorliegenden Ausführungsform ist zwischen dem Bandspanner 3 und den Drehlagern 8 die Bandlaufkorrekturanordnung 10 angeordnet. Insbesondere ist die Bandlaufkorrekturanordnung 10 an der Spanntraverse 19 angebracht und kann mit dieser verschoben werden. Die Bandlaufkorrekturanordnung 10 umfasst eine Korrekturwelle 13, die durch einen nicht eingezeichneten Korrekturantrieb 12 verdreht bzw. verschwenkt werden kann. An der Korrekturwelle 13 sind beidseitig Antriebsglieder 14 angebracht. Diese Antriebsglieder 14 sind bevorzugt exzentrische Antriebsglieder 14 wie beispielsweise Exzenterscheiben. Alternativ sind auch Kurbeln einer Kurbelwelle und je nach Reibverhältnissen auch Nocken denkbar. Durch Verdrehung der Korrekturwelle 13 werden die Antriebsglieder 14 betätigt, um die Drehlager 8 und insbesondere die Zapfen 7 zu verlagern bzw. zu verschieben.

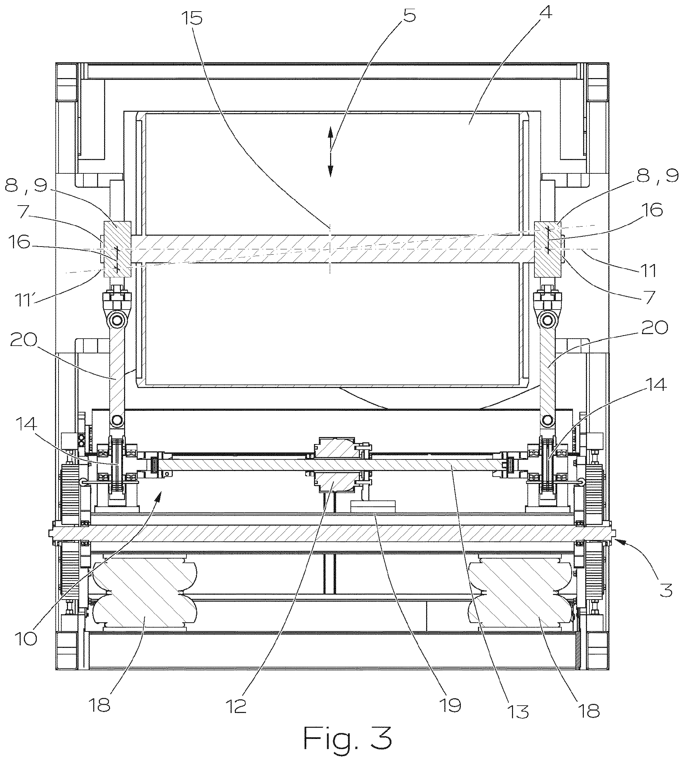

Im Gegensatz zum Bandspanner 3 bewegt die Bandlaufkorrekturanordnung 10 die Drehlager 8 aber nicht parallel bzw. in gleicher Weise sondern gegengleich. Die Funktion der Bandlaufkorrekturanordnung 10 wird anhand der Fig. 3 weiter beschrieben.

Zur Herstellung des Wirkkontaktes zwischen dem Antriebsglied 14 bzw. dem Bandspanner 3 und den Drehlagern 8 können Schubstangen 20 vorgesehen sein. Je nach Bewegungsrichtung können die Schubstangen 20 auch als Zugstangen wirken.

Die Bandlaufkorrekturanordnung 10 ist dazu geeignet und/oder eingerichtet, die Drehachse 11 der Umlenkrolle 4 zu verschwenken. Insbesondere wird die Umlenkrolle 4 um eine Korrekturachse 15 verschwenkt. Gemäß der vorliegenden Ausführungsform verläuft die Korrekturachse 15 normal zur Drehachse 11 und normal zur Hauptförderachse 5 durch den Mittelpunkt bzw. den Schwerpunkt der Umlenkrolle 4.

**Fig.3** zeigt eine Schnittdarstellung, insbesondere eine schematische Schnittdarstellung der Komponenten aus Fig. 2.

Eine Umlenkrolle 4 ist über seitliche Zapfen 7 an Drehlagern 8 drehbar gelagert. Die Drehlager 8 sind unabhängig voneinander entlang der Hauptförderachse 5 verlagerbar, und insbesondere sind die Drehlager 8 in Linearlagern 9 gelagert. Durch unterschiedliche Verlagerung der Drehlager 8 in den Linearlagern 9 kann die Drehachse 11 um die in dieser Ansicht projizierend verlaufende Korrekturachse 15 verschwenkt werden. Eine mögliche verschwenkte Drehachse 11' ist übertrieben und strichliert dargestellt.

Zur Verstellung der Drehachse 11 ist eine Bandlaufkorrekturanordnung 10 vorgesehen. Diese umfasst in der vorliegenden Ausführungsform einen Korrekturantrieb 12, insbesondere einen einzigen Korrekturantrieb 12, der auf eine Korrekturwelle 13 wirkt. Bevorzugt ist der Korrekturantrieb 12 ein Drehantrieb, der die Korrekturwelle 13 dreht. Mit der Korrekturwelle 13 sind zwei Antriebsglieder 14 drehfest verbunden bzw. gekoppelt. Die Antriebsglieder 14 wirken exzentrisch und sind, wie in dieser Ausführungsform, als Exzenter ausgebildet. Da die Exzentrizität der Antriebsglieder 14 lediglich im Millimeterbereich liegt, ist die Exzentrizität in der Darstellung der Fig. 3 nicht zu erkennen. Dies insbesondere auch deshalb, da in der Grundstellung das eine Antriebsglied 14 nach oben und das andere Antriebsglied 14 nach unten steht bzw. exzentrisch ausgelenkt ist.

Die exzentrisch wirkenden Antriebsglieder 14 sind bevorzugt 180° zueinander verdreht und weisen den gleichen Wirkradius auf. Durch eine Verschwenkung der Korrekturwelle 13 bewegen sich die Antriebsglieder 14 zwar in dieselbe Drehrichtung, sie bewirken jedoch eine exakt gegengleiche Verlagerung der Drehlager 8. Insbesondere wird die Drehachse 11 der Umlenkrolle 4 dadurch um die Korrekturachse 15 verschwenkt. Bevorzugt steht in der Grundstellung das eine Antriebsglied 14 von der Korrekturwelle 13 in Richtung der Korrekturachse 15, also beispielsweise nach oben und das andere Antriebsglied in die entgegengesetzte Richtung. Die Korrekturachse 15 verläuft in dieser Ansicht projizierend und bevorzugt durch den Mittelpunkt der Umlenkrolle 4 und normal zur Hauptförderachse 5. Durch eine einfache Verdrehung der Korrekturwelle 13 kann dadurch die Umlenkrolle 4 bzw. deren Drehachse 11, ähnlich einer Wippe, symmetrisch verschwenkt werden.

Die Verstellung erfolgt um einen Korrekturweg 16, der als Verschiebung der Drehlager 8 gemessen wird. Der Korrekturweg 16 des einen Drehlagers 8 entspricht dem Korrekturweg 16 des anderen Drehlagers 8, jedoch in die entgegengesetzte Richtung.

Bevorzugt beträgt der maximale Korrekturweg 16 der Drehlager 8 bzw. der Zapfen 7 +-5mm bzw. gemäß einer weiteren Ausführungsform +-2,5mm.

In allen Ausführungsformen kann vorgesehen sein, dass der Korrekturantrieb 12 durch eine nicht dargestellte Steuerungsanordnung 1, insbesondere unter Berücksichtigung der Daten eines Bandlaufsensors 17, gesteuert bzw. geregelt ist.

Zur Erzeugung der Bandspannung ist ein Bandspanner 3 vorgesehen. Der Bandspanner 3 umfasst in dieser Ausführungsform zwei Bandspannungsaktuatoren 18 zur Erzeugung einer Kraft für die Bandspannung. Die beiden Bandspannungsaktuatoren 18 wirken in der vorliegenden Ausführungsform aber nicht individuell sondern gemeinsam über eine Spanntraverse 19. Die Spanntraverse 19 ist parallel geführt, womit auch die Bandspannungsaktuatoren 18 gemeinsam über die Spanntraverse 19 wirken. Die Spanntraverse 19 umfasst eine Achse oder Welle, die beidseitig mit Zahnrädern versehen ist. Die Zahnräder sind drehfest mit der Achse bzw. Welle verbunden und laufen auf starren Zahnstangen. Dadurch ist die Spanntraverse 19 parallel geführt. Insbesondere ist die Spanntraverse 19 entlang der Hauptförderachse 5 verschiebbar.

Die Spanntraverse 19 wirkt über weitere Elemente auf die Drehlager 8, die, wie zuvor beschrieben, verlagerbar und insbesondere entlang der Linearlager 9 und entlang der Hauptförderachse 5 verlagerbar sind.

Durch Wahl der Betätigung der Bandspannungsaktuatoren 18 kann die Bandspannung erhöht oder verringert werden. In der vorliegenden Ausführungsform wirkt der Bandspanner 3 über Elemente der Bandlaufkorrekturanordnung 10 auf die Drehlager 8. Hierzu ist die Bandlaufkorrekturanordnung 10 an der Spanntraverse 19 angebracht und mit dieser verfahrbar. Obwohl die Bandlaufkorrekturanordnung 10 und der Bandspanner 3 bevorzugt in allen Ausführungsformen in Serie geschaltet auf die Drehlager 8 wirken, können diese dennoch unabhängig voneinander betätigt werden.

So kann die Bandlaufkorrekturanordnung 10 unabhängig von dem Bandspanner 3 die Drehachse 11 der Umlenkrolle 4 anpassen bzw. verschränken. Zusätzlich kann die Bandspannung durch den Bandspanner 3 angepasst werden, ohne die Neigung der Drehachse 11 der Umlenkrolle 4 zu verändern.

Vorrangiger Vorteil dieser Konstellation ist, dass die Bandlaufkorrekturanordnung 10 und insbesondere der Korrekturantrieb 12 der Bandlaufkorrekturanordnung 10 nur die Bandlaufkorrektur steuern und/oder regeln muss und nicht zusätzlich auch noch die Bandspannung aufbringen muss. Durch die Trennung kann eine Verbesserung bzw. Vereinfachung der Einstellbarkeit des Bandlaufs erzielt werden. Zudem kann der Bandspanner 3 Bandspannungsakuatoren 18 verwenden, die zur Aufbringung einer Bandspannung besser geeignet sind als ein Korrekturantrieb 12, der für die genaue Einstellung des Verlaufs der Drehachse 11 optimiert ist.

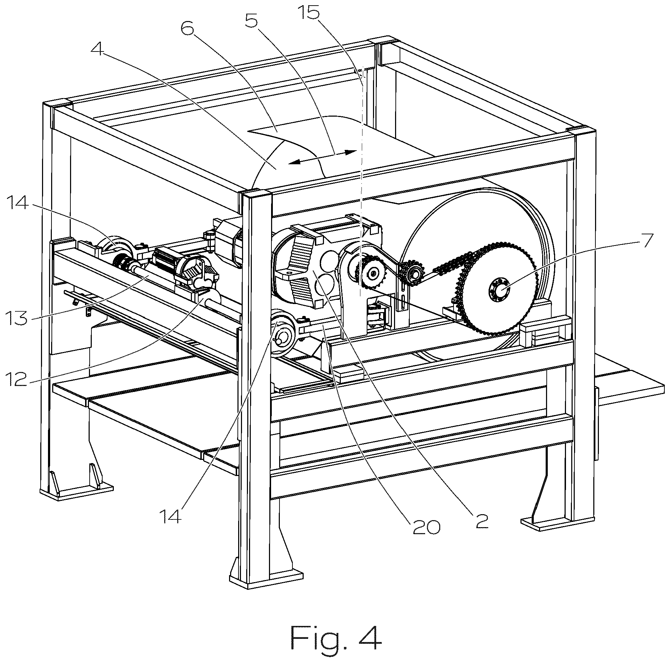

Fig. 4 zeigt eine Schrägansicht von Komponenten eines Bandförderers ähnlich Fig. 2 und Fig. 3. Insbesondere zeigt Fig. 2 Komponenten der einen Umlenkrolle 4 und Fig. 4 Komponenten der anderen Umlenkrolle 4 eines Bandförderers, insbesondere des Bandförderers der Lebensmittelverarbeitungsanlage aus Fig. 1.

Im Gegensatz zu den Komponenten der Fig. 2 entfällt bei der Umlenkrolle 4 der Fig. 4 der Bandspanner 3. Im Unterschied zu der Umlenkrolle 4 der Fig. 2 ist bei der Umlenkrolle 4 der Fig. 4 der Bandantrieb 2 vorgesehen, der auf die Umlenkrolle 4 wirkt, womit die Anordnung als Antriebsstation wirkt. Die Anordnung der Fig. 2 wirkt insbesondere als Spannstation.

Bevorzugt ist in allen Ausführungsformen vorgesehen, dass auf eine der Umlenkrollen 4 der Bandantrieb 2 wirkt und auf die andere Umlenkrolle 4 der Bandspanner 3. Die restlichen Komponenten entsprechen jenen, die in den Fig. 1, 2 und/oder 3 beschrieben sind.

## Patentansprüche

1. **Bandförderer** einer Lebensmittelverarbeitungsanlage, umfassend eine Steuerungsanordnung (1), einen Bandantrieb (2), einen Bandspanner (3), zwei Umlenkrollen (4) und ein, entlang einer Hauptförderachse (5) zwischen den beiden Umlenkrollen (4) durch den Bandspanner (3) gespanntes und von dem Bandantrieb (2) angetriebenes, endloses Förderband (6),
- wobei eine Umlenkrolle (4) oder beide Umlenkrollen (4) jeweils über seitliche Zapfen (7) beidseitig in Drehlagern (8) drehgelagert sind,
- wobei die Drehlager (8) einer Umlenkrolle (4) oder beider Umlenkrollen (4) jeweils, insbesondere in einem Linearlager (9), entlang der Hauptförderachse (5) verlagerbar angeordnet sind,
- wobei eine Bandlaufkorrekturanordnung (10) vorgesehen ist, die den Geradeauslauf des Förderbandes (6) durch Schrägstellung der Drehachse (11) mindestens einer der Umlenkrollen (4) lenkt,
**dadurch gekennzeichnet,**
- **dass** die Bandlaufkorrekturanordnung (10) einen Korrekturantrieb (12), eine quer zur Hauptförderachse (5) verlaufende und von dem Korrekturantrieb (12) antreibbare Korrekturwelle (13) und zwei an der Korrekturwelle (13) vorgesehene, gegengleich exzentrisch wirkende, Antriebsglieder (14) umfasst,
- und **dass** die beiden Antriebsglieder (14) jeweils mit einem der Drehlager (8) in Wirkkontakt stehen und diese bei einer Verdrehung der Korrekturwelle (13) gegengleich entlang der Hauptförderachse (5) verlagern und dadurch die Umlenkrolle (4) um eine Korrekturachse (15) verschwenken.

2. Bandförderer nach Anspruch 1, **dadurch gekennzeichnet,**
- **dass** die Antriebsglieder (14) drehfest an der Korrekturwelle (13) angeordnete Exzenter sind,
- oder dass die Antriebsglieder (14) drehfest an der Korrekturwelle (13) angeordnete Nocken oder Kurbeln sind.

3. Bandförderer nach Anspruch 1 oder 2, wobei die exzentrischen Antriebsglieder (14) derart gegengleich und um 180° zueinander verdreht an der Korrekturwelle (13) vorgesehen sind, dass die von der Kraft der Bandspannung über die Umlenkrolle (4) und die beiden exzentrischen Antriebsglieder (14) auf die Korrekturwelle (13) ausgeübten Drehmomente gleich groß und entgegengesetzt sind und einander dadurch aufheben.

4. Bandförderer nach einem der Ansprüche 1 bis 3, **dadurch gekennzeichnet,**
- **dass** bei einer Verdrehung der Korrekturwelle (13) das eine Antriebsglied (14) das mit diesem Antriebsglied (14) in Wirkkontakt stehende Drehlager (8) um einen Korrekturweg (16) entlang der Hauptförderachse (5) translatorisch verlagert und das andere Antriebsglied (14) das andere Drehlager (8) derselben Umlenkrolle (4) um denselben Korrekturweg (16) entlang der Hauptförderachse (5) aber in die entgegengesetzte Richtung translatorisch verlagert,
- wobei der maximale Korrekturweg (16) bevorzugt jeweils +-5mm oder +-2,5mm beträgt.

5. Bandförderer nach einem der Ansprüche 1 bis 4, **dadurch gekennzeichnet,**
- **dass** die Steuerungsanordnung (1) mindestens einen Bandlaufsensor (17) zur Aufnahme oder Überwachung des Bandlaufs und insbesondere der lokalen Bandposition aufweist,
- und **dass** die Steuerungsanordnung (1) ein Signal des Bandlaufsensors (17) verarbeitet, um den Bandlauf durch Betätigung des Korrekturantriebs (12) der Bandlaufkorrekturanordnung (10) zu steuern oder zu regeln.

6. Bandförderer nach einem der Ansprüche 1 bis 5, **dadurch gekennzeichnet,**
- **dass** die Bandlaufkorrektur der Bandlaufkorrekturanordnung (10) im Wesentlichen spannungsneutral erfolgt und somit die Gesamtbandspannung des Förderbandes (6) bei einer Betätigung der Bandlaufkorrekturanordnung (10) im Wesentlichen unverändert bleibt,
- insbesondere dass die Korrekturachse (15), um die Umlenkrolle (4) durch Verdrehen der Korrekturwelle (13) verschwenkt wird:
- durch den Mittelpunkt der Umlenkrolle (4),
- durch die Drehachse (8) der Umlenkrolle (4),
- normal zur Drehachse (8) der Umlenkrolle (4),
- und im Wesentlichen normal zur Hauptförderachse (5) verläuft.

7. Bandförderer nach einem der Ansprüche 1 bis 6, **dadurch gekennzeichnet,**
- **dass** der Bandspanner (3) eine von der Bandlaufkorrekturanordnung (10) unabhängig arbeitende Vorrichtung des Bandförderers ist,
- und insbesondere dass der Bandspanner (3) mindestens einen eigenen Bandspannungsaktuator (18) zur Erzeugung der Bandspannung aufweist.

8. Bandförderer nach einem der Ansprüche 1 bis 7, **dadurch gekennzeichnet,**
- **dass** der Bandspanner (3) eine quer zur Hauptförderachse (5) verlaufende Spanntraverse (19) aufweist, die entlang der Hauptförderachse (5) verlagerbar und parallelgeführt ist,
- **dass** die Spanntraverse (19) mit den verlagerbaren Drehlagern (8) einer der Umlenkrollen (4) in Wirkkontakt steht,
- und **dass** mindestens ein Bandspannungsaktuator (18) vorgesehen ist, der insbesondere als Balgantrieb ausgebildet ist, und der, zur Erzeugung der gewünschten Bandspannung, über die Spanntraverse (19) auf beide Drehlager (4) dieselbe Spannkraft bzw. dieselbe Spannbewegung ausübt.

9. Bandförderer nach Anspruch 8, **dadurch gekennzeichnet,**
- **dass** die Bandlaufkorrekturanordnung (10) an der Spanntraverse (19) angebracht und mit dieser verschiebbar angeordnet ist,
- und **dass** der Bandspanner (3) und insbesondere dessen Bandspannungsaktuator (18) über die Bandlaufkorrekturanordnung (10) auf die Drehlager (8) der Umlenkrolle (4) wirkt.

10. Bandförderer nach einem der Ansprüche 1 bis 9, **dadurch gekennzeichnet,**
- **dass** der Bandantrieb (2) eine der beiden Umlenkrollen (4) antreibt,
- und insbesondere dass eine der beiden Umlenkrollen (4) von dem Bandantrieb (2) angetrieben ist und der Bandspanner (3) auf die andere Umlenkrolle (4) wirkt.

11. Bandförderer nach einem der Ansprüche 1 bis 10, **dadurch gekennzeichnet, dass** an beiden Umlenkrollen (4) je eine eigene Bandlaufkorrekturanordnung (10) angreift.

12. Bandförderer nach einem der Ansprüche 1 bis 11, **dadurch gekennzeichnet,**
- **dass** das Förderband (6) ein Stahlband ist,
- **dass** das Stahlband bevorzugt eine Breite von 1m bis 2m aufweist,
- **dass** das Stahlband bevorzugt eine Dicke von 1mm bis 1,5mm aufweist,
- **dass** das Stahlband bevorzugt eine Länge von 20 bis 100m aufweist,
- **dass** das Stahlband bevorzugt eine Fördergeschwindigkeit von 5m/min bis 20m/min aufweist,
- **dass** die Bandspannung bevorzugt 10N/mm² bis 30N/mm² beträgt.

13. **Lebensmittelverarbeitungsanlage** umfassend:
- einen Bandförderer nach einem der Ansprüche 1 bis 12,
- eine Auftragsstation (21) zum Auftrag einer zu verarbeitenden Lebensmittelmasse, wie insbesondere einer portionierten, geschmolzenen, fetthaltigen Masse oder einem portionierten Teig, auf den Bandförderer,
- eine gekühlte oder beheizte Temperierstrecke (22) zum Temperieren und insbesondere Verfestigen bzw. Backen der Lebensmittelmasse,
- und eine Abnahmestation (23) zum Entfernen der zuvor temperierten Lebensmittelmasse von dem Bandförderer.

14. Lebensmittelverarbeitungsanlage nach Anspruch 13, **dadurch gekennzeichnet,**
- **dass** die Auftragsstation (21) eine fetthaltige Masse punktförmig oder tropfenförmig auf den kontinuierlich bewegten Bandförderer aufträgt,
- **dass** die Temperierstrecke (22) durch einen Temperierraum verläuft, der ein gekühlter Raum und insbesondere ein Kühltunnel ist, in dem die punktförmig aufgetragene, fetthaltige Masse durch Kühlen verfestigt wird,
- und **dass** die Abnahmestation (23) die verfestigten Körper von dem Bandförderer entfernt.

15. Lebensmittelverarbeitungsanlage nach Anspruch 14, **dadurch gekennzeichnet, dass** eine Rüttelstation (24) vorgesehen ist, die das Förderband (6) und die darauf punktförmig oder tropfenförmig aufgetragene Masse nach der Auftragsstation (21) und vor deren Verfestigung rüttelt.

## Claims

1. A **belt conveyor** for a food processing facility, comprising a control arrangement (1), a belt drive (2), a belt tensioner (3), two deflection rollers (4) and an endless conveyor belt (6) tensioned by the belt tensioner (3) along a main conveyor axis (5) between the two deflection rollers (4) and driven by the belt drive (2),
- wherein one deflection roller (4) or both deflection rollers (4) are each rotatably mounted on both sides in pivot bearings (8) via lateral journals (7),
- wherein the pivot bearings (8) of one deflection roller (4) or both deflection rollers (4) are each arranged to be displaceable along the main conveyor axis (5), in particular in a linear bearing (9),
- wherein a belt tracking correction arrangement (10) is provided which controls the tracking of the conveyor belt (6) by tilting the rotational axis (11) of at least one of the deflection rollers (4),
**characterised**
- **in that** the belt tracking correction arrangement (10) comprises a correction drive (12), a correction shaft (13) extending transversely to the main conveyor axis (5) and drivable by the correction drive (12), and two drive members (14) provided on the correction shaft (13) and acting eccentrically in opposite directions,
- and **in that** the two drive members (14) are each in operative contact with one of the pivot bearings (8) and displace them in opposite directions along the main conveyor axis (5) when the correction shaft (13) is rotated, thereby pivoting the deflection roller (4) about a correction axis (15).

2. The belt conveyor according to claim 1, **characterised**
- **in that** the drive members (14) are eccentrics arranged in a rotationally fixed manner on the correction shaft (13),
- or in that the drive members (14) are cams or cranks arranged on the correction shaft (13) in a rotationally fixed manner.

3. The belt conveyor according to claim 1 or 2 , wherein the eccentric drive members (14) are provided on the correction shaft (13) in opposite directions and rotated by 180° relative to one another in such a way that the torques exerted on the correction shaft (13) by the force of the belt tension via the deflection roller (4) and the two eccentric drive members (14) are equal and opposite and thereby cancelling each other out.

4. The belt conveyor according to one of claims 1 to 3, **characterised**
- **in that**, when the correction shaft (13) is rotated, one drive member (14) translates the pivot bearing (8) in operative contact with this drive member (14) by a correction travel (16) along the main conveyor axis (5) and the other drive member (14) translates the other pivot bearing (8) of the same deflection roller (4) by the same correction travel (16) along the main conveyor axis (5), but in the opposite direction,
- wherein the maximum correction travel (16) is preferably +-5mm or +-2.5mm in each case.

5. The belt conveyor according to one of claims 1 to 4, **characterised**
- **in that** the control arrangement (1) has at least one belt tracking sensor (17) for recording or monitoring the belt tracking and, in particular, the local belt position,
- and **in that** the control arrangement (1) processes a signal from the belt tracking sensor (17) in order to control or regulate the belt tracking by actuating the correction drive (12) of the belt tracking correction arrangement (10).

6. The belt conveyor according to one of claims 1 to 5, **characterised**
- **in that** the belt tracking correction of the belt tracking correction arrangement (10) is substantially tension-neutral and thus the overall belt tension of the conveyor belt (6) remains substantially unchanged when the belt tracking correction arrangement (10) is actuated,
- in particular in that the correction axis (15) is pivoted around the deflection roller (4) by rotating the correction shaft (13):
- through the centre of the deflection roller (4),
- through the rotational axis (8) of the deflection roller (4),
- normal to the rotational axis (8) of the deflection roller (4),
- and extends substantially normal to the main conveyor axis (5).

7. The belt conveyor according to one of claims 1 to 6, **characterised**
- **in that** the belt tensioner (3) is a device of the belt conveyor that operates independently of the belt tracking correction arrangement (10),
- and in particular in that the belt tensioner (3) has at least one dedicated belt tension actuator (18) for generating the belt tension.

8. The belt conveyor according to one of claims 1 to 7, **characterised**
- **in that** the belt tensioner (3) has a tensioning crossbar (19) extending transversely to the main conveyor axis (5), which can be displaced along the main conveyor axis (5) and is parallel guided,
- **in that** the tensioning crossbar (19) is in operative contact with the displaceable pivot bearings (8) of one of the deflection rollers (4),
- and **in that** at least one belt tensioning actuator (18) is provided, which is designed in particular as a bellows drive and which, in order to generate the desired belt tension, exerts the same tensioning force/the same tensioning movement on both pivot bearings (4) via the tensioning crossbar (19).

9. The belt conveyor according to claim 8, **characterised**
- **in that** the belt tracking correction arrangement (10) is attached to the tensioning crossbar (19) and is displaceably arranged therewith,
- and **in that** the belt tensioner (3) and in particular its belt tension actuator (18) acts on the pivot bearings (8) of the deflection roller (4) via the belt tracking correction arrangement (10).

10. The belt conveyor according to one of claims 1 to 9, **characterised**
- **in that** the belt drive (2) drives one of the two deflection rollers (4),
- and in particular in that one of the two deflection rollers (4) is driven by the belt drive (2) and the belt tensioner (3) acts on the other deflection roller (4).

11. The belt conveyor according to one of claims 1 to 10, **characterised in that** a dedicated belt tracking correction arrangement (10) acts on each of the two deflection rollers (4).

12. The belt conveyor according to one of claims 1 to 11, **characterised**
- **in that** the conveyor belt (6) is a steel belt,
- **in that** the steel belt preferably has a width of 1m to 2m,
- **in that** the steel belt preferably has a thickness of 1mm to 1.5mm,
- **in that** the steel belt preferably has a length of 20 to 100m,
- **in that** the steel belt preferably has a conveying speed of 5m/min to 20m/min,
- **in that** the belt tension is preferably 10N/mm² to 30N/mm².

13. **A food processing facility,** comprising:
- a belt conveyor according to one of claims 1 to 12,
- an application station (21) for applying a food mass to be processed, such as in particular a portioned, melted, fat-containing mass or a portioned dough, to the belt conveyor,
- a cooled or heated tempering section (22) for tempering and, in particular, solidifying/baking the food mass,
- and a removal station (23) for removing the previously tempered food mass from the belt conveyor.

14. The food processing facility according to claim 13, **characterised**
- **in that** the application station (21) applies a fat-containing mass to the continuously moving belt conveyor in the form of dots or drops,
- **in that** the tempering section (22) extends through a tempering space which is a cooled space and, in particular, a cooling tunnel in which the fat-containing mass applied in the form of dots is solidified by cooling,
- and **in that** the removal station (23) removes the solidified bodies from the belt conveyor.

15. The food processing facility according to claim 14, **characterised in that** a shaking station (24) is provided, which shakes the conveyor belt (6) and the mass applied thereto in the form of dots or drops after the application station (21) and before it solidifies.

## Revendications

1. **Transporteur à courroie** d'une installation de traitement de produits alimentaires, comprenant un agencement de commande (1), un entraînement de courroie (2), un extenseur de courroie (3), deux poulies de renvoi (4) et une courroie de transport (6) sans fin tendue le long d'un axe de transport principal (5) entre les deux poulies de renvoi (4) par l'extenseur de courroie (3) et entraînée par l'entraînement de courroie (2),
- dans lequel une poulie de renvoi (4) ou les deux poulies de renvoi (4) sont respectivement montées en rotation des deux côtés dans des paliers de rotation (8) par l'intermédiaire de tourillons latéraux (7),
- dans lequel les paliers de rotation (8) d'une poulie de renvoi (4) ou des deux poulies de renvoi (4) sont disposés chacun, en particulier dans un palier linéaire (9), de manière à pouvoir être déplacés le long de l'axe de transport principal (5),
- dans lequel un agencement de correction de défilement de courroie (10) est prévu, qui dirige la marche en ligne droite de la courroie de transport (6) par une position inclinée de l'axe de rotation (11) d'au moins une des poulies de renvoi (4),
**caractérisé**
- **en ce que** l'agencement de correction de défilement de la courroie (10) comprend un entraînement de correction (12), un arbre de correction (13) s'étendant transversalement à l'axe de transport principal (5) et pouvant être entraîné par l'entraînement de correction (12), et deux organes d'entraînement (14) prévus sur l'arbre de correction (13) et agissant de manière excentrée en sens inverse,
- et **en ce que** les deux organes d'entraînement (14) sont chacun en contact actif avec l'un des paliers de rotation (8) et déplacent ceux-ci de manière opposée le long de l'axe de transport principal (5) lors d'une rotation de l'arbre de correction (13) et font ainsi pivoter la poulie de renvoi (4) autour d'un axe de correction (15).

2. Transporteur à courroie selon la revendication 1, **caractérisé**
- **en ce que** les organes d'entraînement (14) sont des excentriques disposés de manière solidaire en rotation sur l'arbre de correction (13),
- ou en ce que les organes d'entraînement (14) sont des cames ou des manivelles disposées de manière solidaire en rotation sur l'arbre de correction (13).

3. Transporteur à courroie selon la revendication 1 ou 2, dans lequel les organes d'entraînement (14) excentriques sont prévus sur l'arbre de correction (13) de manière opposée et tournés de 180° l'un par rapport à l'autre de telle sorte que les couples exercés sur l'arbre de correction (13) par la force de la tension de la courroie par l'intermédiaire de la poulie de renvoi (4) et des deux organes d'entraînement (14) excentriques sont égaux et opposés et s'annulent ainsi mutuellement.

4. Transporteur à courroie selon l'une des revendications 1 à 3, **caractérisé**
- **en ce que**, lors d'une rotation de l'arbre de correction (13), l'un des organes d'entraînement (14) déplace en translation le palier de rotation (8) en contact actif avec cet organe d'entraînement (14) d'une course de correction (16) le long de l'axe de transport principal (5) et l'autre organe d'entraînement (14) déplace en translation l'autre palier de rotation (8) de la même poulie de renvoi (4) de la même course de correction (16) le long de l'axe de transport principal (5) mais dans la direction opposée,
- dans lequel la course de correction (16) maximale est de préférence respectivement de +-5mm ou de +-2,5mm.

5. Transporteur à courroie selon l'une des revendications 1 à 4, **caractérisé**
- **en ce que** l'agencement de commande (1) présente au moins un capteur de défilement de courroie (17) pour enregistrer ou surveiller le défilement de la courroie et en particulier la position locale de la courroie,
- et **en ce que** l'agencement de commande (1) traite un signal du capteur de défilement de courroie (17) pour commander ou réguler le défilement de la courroie en actionnant l'entraînement de correction (12) de l'agencement de correction de défilement de courroie (10).

6. Transporteur à courroie selon l'une des revendications 1 à 5, **caractérisé**
- **en ce que** la correction du défilement de la courroie de l'agencement de correction de défilement de la courroie (10) s'effectue de manière essentiellement neutre en termes de tension et que, par conséquent, la tension totale de la courroie de transport (6) reste essentiellement inchangée lors d'un actionnement de l'agencement de correction de défilement de la courroie (10),
- en particulier en ce que l'axe de correction (15) est pivoté autour de la poulie de renvoi (4) par rotation de l'arbre de correction (13) :
- à travers le centre de la poulie de renvoi (4),
- à travers l'axe de rotation (8) de la poulie de renvoi (4),
- perpendiculaire à l'axe de rotation (8) de la poulie de renvoi (4),
- et s'étend sensiblement perpendiculairement à l'axe de transport principal (5).

7. Transporteur à courroie selon l'une des revendications 1 à 6, **caractérisé**
- **en ce que** l'extenseur de courroie (3) est un agencement **du** transporteur à courroie fonctionnant indépendamment de l'agencement de correction de défilement de la courroie (10),
- et en particulier en ce que l'extenseur de courroie (3) présente au moins un propre actionneur de tension de courroie (18) pour générer la tension de courroie.

8. Transporteur à courroie selon l'une des revendications 1 à 7, **caractérisé**
- **en ce que** l'extenseur de courroie (3) présente une traverse de tension (19) s'étendant transversalement à l'axe de transport principal (5), qui peut être déplacée et guidée parallèlement le long de l'axe de transport principal (5),
- **en ce que** la traverse de tension (19) est en contact actif avec les paliers de rotation (8) déplaçables de l'une des poulies de renvoi (4),
- et **en ce qu'**il est prévu au moins un actionneur de tension de courroie (18), qui est réalisé en particulier sous la forme d'un entraînement à soufflet, et qui, pour produire la tension de courroie souhaitée, exerce la même force de tension ou le même mouvement de tension sur les deux paliers de rotation (4) par l'intermédiaire de la traverse de tension (19).

9. Transporteur à courroie selon la revendication 8, **caractérisé**
- **en ce que** l'agencement de correction de défilement de courroie (10) est monté sur la traverse de tension (19) et est disposé de manière à pouvoir être déplacé avec celle-ci,
- et **en ce que** l'extenseur de courroie (3) et en particulier son actionneur de tension de courroie (18) agit sur les paliers de rotation (8) de la poulie de renvoi (4) par l'intermédiaire de l'agencement de correction de défilement de courroie (10).

10. Transporteur à courroie selon l'une des revendications 1 à 9, **caractérisé**
- **en ce que** l'entraînement de courroie (2) entraîne l'une des deux poulies de renvoi (4),
- et en particulier en ce que l'une des deux poulies de renvoi (4) est entraînée par l'entraînement de courroie (2) et que l'extenseur de courroie (3) agit sur l'autre poulie de renvoi (4).

11. Transporteur à courroie selon l'une des revendications 1 à 10, **caractérisé en ce qu'**un agencement de correction de défilement de courroie (10) propre s'applique à chacun des deux poulies de renvoi (4).

12. Transporteur à courroie selon l'une des revendications 1 à 11, **caractérisé**
- **en ce que** la courroie de transport (6) est une courroie en acier,
- **en ce que** la courroie en acier présente de préférence une largeur de 1 m à 2 m,
- **en ce que** la courroie en acier présente de préférence une épaisseur de 1 mm à 1,5 mm,
- **en ce que** la courroie en acier présente de préférence une longueur de 20 à 100 m,
- **en ce que** la courroie en acier présente de préférence une vitesse de transport de 5 m/min à 20 m/min,
- **en ce que** la tension de courroie est de préférence de 10N/mm² à 30N/mm².

13. **Installation de traitement de produits alimentaires,** comprenant :
- un transporteur à courroie selon l'une des revendications 1 à 12,
- un poste d'application (21) pour appliquer une masse alimentaire à traiter, telle qu'en particulier une masse portionnée, fondue, contenant de la graisse ou une pâte portionnée, sur le transporteur à courroie,
- une section de tempérage (22) refroidie ou chauffée pour le tempérage et en particulier la solidification ou la cuisson de la masse alimentaire,
- et une station d'enlèvement (23) pour enlever la masse d'aliments préalablement tempérée du transporteur à courroie.

14. Installation de traitement de produits alimentaires selon la revendication 13, **caractérisée**
- **en ce que** le poste d'application (21) applique une masse contenant de la graisse sous forme de points ou de gouttes sur le transporteur à courroie en mouvement continu,
- **en ce que** la section de tempérage (22) s'étend à travers un espace de tempérage qui est un espace refroidi et en particulier un tunnel de refroidissement dans lequel la masse contenant de la graisse, appliquée sous forme de points, est solidifiée par refroidissement,
- et **en ce que** la station d'enlèvement (23) enlève les corps solidifiés du transporteur à courroie.

15. Installation de traitement de produits alimentaires selon la revendication 14, **caractérisée en ce qu'**il est prévu une station de secouage (24) qui secoue la courroie de transport (6) et la masse qui y est appliquée sous forme de points ou de gouttes après le poste d'application (21) et avant sa solidification.
